# EUROPÄISCHE PATENTSCHRIFT

(11) **EP 2 094 983 B1**
(45) Veröffentlichungstag und Bekanntmachung des Hinweises auf die Patenterteilung: **12.06.2013**
(21) Anmeldenummer: 07817793.8
(22) Anmeldetag: 15.11.2007
(51) Int. Cl.: F16C 19/26, F16C 27/04, F16C 33/34

(54) **RADIALWÄLZLAGER, INSBESONDERE ZUR LAGERUNG VON WELLEN IN WINDKRAFTGETRIEBEN**
RADIAL ROLLER BEARING, IN PARTICULAR FOR STORING SHAFTS IN WIND TURBINE TRANSMISSIONS
PALIER À ROULEMENT, NOTAMMENT POUR LE LOGEMENT D'ARBRES DANS DES MÉCANISMES MOTEURS À VENT

(30) Priorität: 22.11.2006 DE 102006055026
(43) Veröffentlichungstag der Anmeldung: 02.09.2009
(73) Patentinhaber: Schaeffler Technologies AG & Co. KG, 91074 Herzogenaurach (DE)
(72) Erfinder: ENDRES, Bernd, 97520 Röthlein (DE); HOFFINGER, Christian, 91166 Georgensgmünd (DE); KRONENBERGER, Alban, 97532 Üchtelhausen (DE); MÜLLER, Tobias, 36160 Dipperz (DE)
(86) Internationale Anmeldenummer: PCT/DE2007/002070
(87) Internationale Veröffentlichungsnummer: WO 2008/061504

(56) Entgegenhaltungen:
- WO-A-03/057548
- DE-A1- 2 152 125
- DE-A1- 2 338 686
- FR-A- 2 479 369

## Beschreibung

### Gebiet der Erfindung

Die Erfindung betrifft ein Radialwälzlager nach den oberbegriffsbildenden Merkmalen des Patentanspruchs 1, und sie ist insbesondere vorteilhaft an zumindest zeitweise unter sehr geringer Last laufenden Lagerungen, wie beispielsweise der Lagerung von Wellen in Windkraftgetrieben, realisierbar.

### Hintergrund der Erfindung

Dem Fachmann in der Wälzlagertechnik ist es allgemein bekannt, dass Radialwälzlager bei ausreichender Belastung einen optimalen kinematischen Betriebszustand aufweisen, bei dem die Wälzkörper ohne zu gleiten auf den Laufbahnen des inneren und des äußeren Lagerrings abrollen. Desweiteren ist es von zumindest zeitweise niedrig belasteten Radialwälzlagern bekannt, dass sich der aus den Wälzkörpern und deren Lagerkäfig bestehende Wälzkörpersatz aufgrund der Reibung im Lager beziehungsweise aufgrund der hohen Massenkraft des Wälzkörpersatzes und der zeitweise geringen Kontaktkraft zwischen den Wälzkörpern und den Laufbahnen nicht mit der kinematischen Drehzahl dreht. Die Drehzahl des Wälzkörpersatzes bleibt folglich gegenüber der kinematischen Drehzahl zurück, so dass sich die Wälzkörper in einem kinematisch nicht optimalen Zustand befinden, durch den zwischen diesen Wälzkörpern und mindestens einer Laufbahn Schlupf vorliegt. Dabei kann sich an den Kontaktflächen zwischen den Wälzkörpern und der Laufbahn ein Schmierfilm aufbauen, der jedoch bei plötzlicher Drehzahl- oder Belastungsänderung zerstört wird, so dass an den schlupfbehafteten Kontaktstellen innerhalb kürzester Zeit kein ausreichender Schmierfilm mehr vorliegt. Dies hat zur Folge, dass es zu einer metallischen Berührung der Laufbahn mit den Wälzkörpern kommt und diese auf der Laufbahn gleiten, bis die Wälzkörper auf die kinematische Drehzahl beschleunigt sind. Diese große Differenzgeschwindigkeit zwischen der Laufbahn und den Wälzkörpern sowie das Fehlen eines trennenden Schmierfilms ist somit ursächlich dafür, dass es in den Oberflächen der Laufbahn und der Wälzkörper zu hohen Tangentialspannungen kommt, die mit stärksten Verschleißerscheinungen, wie Aufrauhungen der Laufbahnen, Materialaufreißungen und Anschmierungen zumeist in Verbindung mit Mikropittings verbunden sind und zum vorzeitigen Ausfall des Radialwälzlagers führen.

Durch die FR 2 479 369 wurde deshalb ein gattungsbildendes Radialwälzlager vorgeschlagen, welches im Wesentlichen aus einem äußeren Lagerring mit einer inneren Laufbahn und aus einem koaxial zu diesem angeordneten inneren Lagerring mit einer äußeren Laufbahn sowie aus einer Vielzahl zwischen den Lagerringen auf deren Laufbahnen abrollender und durch einen Lagerkäfig in Umfangsrichtung in gleichmäßigen Abständen zueinander gehaltener Wälzkörper besteht, bei dem zur Vermeidung des beschriebenen Schlupfeffektes und der daraus resultierenden Nachteile zwischen den Wälzkörpern und den Lagerringen mehrere gleichmäßig auf dem Umfang verteilte Wälzkörper durch Hohlrollen ersetzt sind. Diese zudem axial etwas kürzer als die übrigen Wälzkörper ausgebildeten Hohlrollen weisen dabei einen geringfügig größeren Durchmesser und einen geringeren Elastizitätsmodul als die übrigen Wälzkörper auf, so dass diese im lastfreien Zustand des Radialwälzlagers einen ständigen Kontakt zu den Lagerringen aufweisen und somit einen stetigen Antrieb des Lagerkäfigs und damit der übrigen Wälzkörper mit kinematischer Drehzahl gewährleisten.

In der Praxis hat es sich jedoch gezeigt, dass die durch ihre permanente Verformung einer stetigen Biegewechselbeanspruchung unterliegenden Hohlrollen derartiger Radialwälzlager hinsichtlich ihrer Belastbarkeit und Dauerfestigkeit potentielle Schwachstellen des Wälzlagers darstellen, die für eine verringerte Tragfähigkeit und eine verkürzte Lebensdauer des Wälzlagers ursächlich sind. So wurde beispielsweise ermittelt, dass an den Innenmantelflächen der Hohlrollen örtliche Spannungsspitzen auftreten, die im Dauerbetrieb des Wälzlagers zu Anrissen und schließlich zum Bruch der Hohlrollen führten. Dies war insbesondere auf eine mangelnde Oberflächenbeschaffenheit der Innenmantelflächen der Hohlrollen sowie darauf zurück zu führen, dass die Innenmantelflächen der Hohlrollen zusätzlich mikroskopisch feine Riefen in Axialrichtung bzw. senkrecht zur maximalen Zugspannung aufwiesen, in denen es zu überhöhten Spannungskonzentrationen kam. Eine naheliegende Maßnahme zur Vermeidung solcher Spannungskonzentrationen wäre es zwar, sowohl die Hohlrollen als auch die übrigen Wälzkörper stärker zu dimensionieren, dies würde jedoch zwangsläufig eine Vergrößerung des gesamten Lagerbauraums sowie eine Erhöhung der Herstellungskosten für das Wälzlager zur Folge haben.

### Aufgabe der Erfindung

Ausgehend von den dargelegten Nachteilen des bekannten Standes der Technik liegt der Erfindung deshalb die Aufgabe zu Grunde, ein Radialwälzlager, insbesondere zur Lagerung von Wellen in Windkraftgetrieben, zu konzipieren, welches unter weitestgehender Beibehaltung seiner ursprünglichen Leistungsmerkmale, wie Tragzahl, Bauraum und Lebensdauer, zur Vermeidung von Schlupf zwischen den Wälzkörpern und den Lagerringen mit Hohlrollen ausgestattet ist, die eine erhöhte Biegewechselfestigkeit ohne örtliche Spannungsspitzen an ihren Innenmantelflächen aufweisen.

### Beschreibung der Erfindung

Erfindungsgemäß wird diese Aufgabe bei einem Radialwälzlager nach dem Oberbegriff des Anspruchs 1 derart gelöst, dass Innenmantelflächen der Hohlrollen mit einer örtliche Spannungsspitzen vermeidenden maximalen Oberflächenrauheit von R_{Z} ≤ 25 µm ohne jegliche Riefen in Axialrichtung ausgebildet sind.

Der Erfindung liegt somit die Erkenntnis zugrunde, dass es durch gezielte Verbesserung der Oberflächenbeschaffenheit der Innenmantelflächen der Hohlrollen bereits möglich ist, die zu Anrissen und schließlich zum Bruch der Hohlrollen führenden örtlichen Spannungsspitzen in den Hohlrollen zu vermeiden und damit die Dauerfestigkeit der Hohlrollen sowie die Tragfähigkeit und die Lebensdauer derartiger Radialwälzlager entscheidend zu erhöhen.

Bevorzugte Ausgestaltungen und Weiterbildungen des erfindungsgemäß ausgebildeten Radialwälzlagers werden in den Unteransprüchen beschrieben.

Danach ist es gemäß Anspruch 2 eine besonders vorteilhafte Ausgestaltung des erfindungsgemäß ausgebildeten Radialwälzlagers, wenn die Hohlrollen die gleiche axiale Länge wie die übrigen Wälzkörper aufweisen und deren Innenmantelflächen mit einer Oberflächenrauheit von R_{Z} ≤ 6,3 µm ausgebildet sind. Die Ausbildung der Hohlrollen mit der gleichen axialen Länge wie die übrigen Wälzkörper trägt dabei dazu bei, die durch die Hohlrollen konstruktionsbedingt entstehenden Verluste an Tragfähigkeit des Radialwälzlagers so gering wie möglich zu halten, während der Wert der Oberflächenrauheit von R_{Z} ≤ 6,3 µm ein Optimum hinsichtlich des Aufwandes und der Kosten zur Erreichung einer hohen Oberflächengüte an den Innenmantelflächen der Hohlrollen darstellt.

Eine erste Möglichkeit eine solche Oberflächengüte an den Innenmantelflächen der Hohlrollen des erfindungsgemäß ausgebildeten Radialwälzlagers einfach und kostengünstig zu erreichen besteht nach Anspruch 3 darin, dass die Innenmantelflächen der Hohlrollen durch Hartdrehen bearbeitet sind. Als Hartdrehen wird im Allgemeinen das Drehen von harten und gehärteten Werkstoffen bezeichnet, wobei das größte Anwendungsgebiet die Zerspanung von gehärteten Stahlwerkstoffen wie z.B. durchgehärtete Stähle und randschichtgehärtete Stähle darstellt. Beim Hartdrehen wird die durch den Zerspanungsprozess in der Schnittzone erzeugte Wärme genutzt, um den Werkstoff lokal zu plastifizieren und damit einen duktilen Materialabtrag zu erreichen. Das Hartdrehen stellt dabei eine Alternative zum Schleifen dar und bietet verfahrensspezifische Vorteile, wie kurze Rüstzeiten, die Möglichkeit zur Trockenbearbeitung und eine hohe Flexibilität.

Gemäß Anspruch 4 ist es eine weitere Möglichkeit zur Erreichung einer hohen Oberflächengüte an den Innenmantelflächen der Hohlrollen des erfindungsgemäß ausgebildeten Radialwälzlagers, dass die Innenmantelflächen der Hohlrollen durch Hartglattwalzen bearbeitet sind. Dieses Bearbeitungsverfahren ist ein Verfahren der spanlosen Formgebung und beruht darauf, dass unter dem Anpressdruck von gehärteten Wälzkörpern, wie Rollen oder Kugeln, das Rauhigkeitsprofil von spanend bearbeiteten Oberflächen geglättet wird. Dies geschieht durch eine plastische Verformung der Profilspitzen in der Form, dass die zwischen Walzen und Werkstoff auftretende Flächenpressung im Werkstoff dreidimensionale Druckspannungen erzeugt, welche die Fließspannung des Werkstoffes erreichen und somit eine örtliche plastische Verformung bzw. eine starke Einglättung der Oberflächenrauheit bewirken, so dass Werte im Bereich von R_{Z} = 1 µm erreichbar sind. Ein weiterer positiver Effekt dieses Verfahrens ist die gleichzeitige Verfestigung der Oberfläche und die damit verbundenen hohen Druckeigenspannungen im Randbereich, die zu einer weiteren Erhöhung der Biegewechselfestigkeit der Hohlrollen führen.

Als weitere Möglichkeit zur Erreichung einer hohen Oberflächengüte an den Innenmantelflächen der Hohlrollen des erfindungsgemäß ausgebildeten Radialwälzlagers wird es durch Anspruch 5 schließlich noch vorgeschlagen, dass die Innenmantelflächen der Hohlrollen durch Schleifen und Honen bearbeitet sind. Diese spangebenden Oberflächenbearbeitungsverfahren sind seit langem für ihre hohen Oberflächenqualitäten bekannt und bedürfen deshalb an dieser Stelle keiner weiteren Erläuterung. Lediglich erwähnt werden soll jedoch noch, dass es gemäß Anspruch 6 natürlich auch möglich ist, die Innenmantelflächen der Hohlrollen durch eine Kombination aus Hartdrehen oder Hartglattwalzen sowie Schleifen und Honen oder auch durch andere geeignete Verfahren, wie Fertigdrehen vor dem Härten od. dgl., zu bearbeiteten.

Das erfindungsgemäß ausgebildete Radialwälzlager weist somit gegenüber den aus dem Stand der Technik bekannten Radialwälzlagern den Vorteil auf, dass es unter weitestgehender Beibehaltung seiner ursprünglichen Leistungsmerkmale, wie Tragzahl, Bauraum und Lebensdauer, zur Vermeidung von Schlupf zwischen den Wälzkörpern und den Lagerringen mit Hohlrollen ausgestattet ist, die durch eine gezielte Einstellung der Oberflächenbeschaffenheit an ihren Innenmantelflächen eine erhöhte Biegewechsel- und Dauerfestigkeit ohne örtliche Spannungsspitzen aufweisen. Diese Vorteile treten dabei auch dann ein, wenn die Wälzkörper nicht durch einen Lagerkäfig geführt werden, sondern sich wie bei vollrolligen Lagern selbst führen.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Dabei zeigen:
- Figur 1: eine Seitenansicht eines erfindungsgemäß ausgebildeten Radialwälzlagers;
- Figur 2: den Querschnitt A - A durch das erfindungsgemäß ausgebildete Radialwälzlager nach Figur 1.

### Ausführliche Beschreibung der Zeichnungen

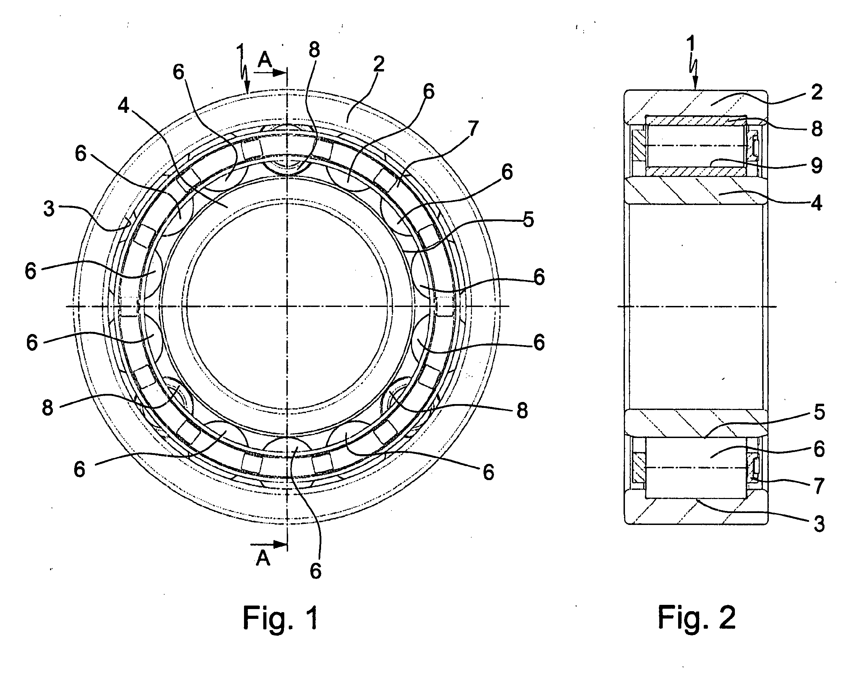

Aus den Darstellungen der Figuren 1 und 2 geht deutlich ein zur Lagerung von Wellen in Windkraftgetrieben geeignetes Radialwälzlager 1 hervor, welches in bekannter Weise aus einem äußeren Lagerring 2 mit einer inneren Laufbahn 3 und einem koaxial zu diesem angeordneten inneren Lagerring 4 mit einer äußeren Laufbahn 5 sowie aus einer Vielzahl zwischen den Lagerringen 2, 4 auf deren Laufbahnen 3, 5 abrollender Wälzkörper 6 besteht, die durch einen Lagerkäfig 7 in Umfangsrichtung in gleichmäßigen Abständen zueinander gehalten werden. Ebenso ist aus den Zeichnungen klar ersichtlich, dass bei dem dargestellten Radialwälzlager 1 zur Vermeidung von Schlupf zwischen den Wälzkörpern 6 und den Lagerringen 2, 4 drei gleichmäßig auf dem Umfang verteilte Wälzkörper 6 durch Hohlrollen 8 ersetzt sind, die einen geringfügig größeren Durchmesser und einen geringeren Elastizitätsmodul als die übrigen Wälzkörper 6 aufweisen, um im lastfreien Zustand des Radialwälzlagers 1 einen ständigen Kontakt zu den Lagerringen 2, 4 und somit einen stetigen Antrieb des Lagerkäfigs 7 und damit der übrigen Wälzkörper 6 mit kinematischer Drehzahl gewährleisten.

Damit an den Innenmantelflächen 9 der Hohlrollen 8 keine örtliche Spannungsspitzen mehr auftreten, die im Dauerbetrieb des Radialwälzlagers 1 zu Anrissen und zum Bruch der Hohlrollen 8 führen könnten, sind die Hohlrollen 8 weiterführend in erfindungsgemäßer Weise mit einer erhöhten Biegewechselfestigkeit ausgebildet. Dies wird erreicht, indem die Hohlrollen 8 die gleiche axiale Länge wie die übrigen Wälzkörper 6 aufweisen und deren Innenmantelflächen 9 mit einer Oberflächenrauheit von R_{Z} ≤ 6,3 µm ohne jegliche Riefen in Axialrichtung ausgebildet sind. Eine solch hohe Oberflächengüte ist besonders einfach und kostengünstig durch das Bearbeiten der Innenmantelflächen 9 der Hohlrollen 8 mittels Hartdrehen herstellbar, bei dem die durch den Zerspanungsprozess in der Schnittzone erzeugte Wärme genutzt wird, um den Werkstoff lokal zu plastifizieren und damit einen duktilen Materialabtrag zu erreichen.

### Bezugszahlenliste

| | |
|---|---|
| 1 | Radialwälzlager |
| 2 | äußerer Lagerring |
| 3 | innere Laufbahn |
| 4 | innerer Lagerring |
| 5 | äußere Laufbahn |
| 6 | Wälzkörper |
| 7 | Lagerkäfig |
| 8 | Hohlrollen |
| 9 | Innenmantelflächen |
| R_{Z} | Oberflächenrauheit |

## Patentansprüche

1. Radialwälzlager, insbesondere zur Lagerung von Wellen in Windkraftgetrieben, welches im Wesentlichen aus einem äußeren Lagerring (2) mit einer inneren Laufbahn (3) und einem koaxial zu diesem angeordneten inneren Lagerring (4) mit einer äußeren Laufbahn (5) sowie aus einer Vielzahl zwischen den Lagerringen (2, 4) auf deren Laufbahnen (3, 5) abrollender Wälzkörper (6) besteht, die durch einen Lagerkäfig (7) in Umfangsrichtung in gleichmäßigen Abständen zueinander gehalten werden, wobei zur Vermeidung von Schlupf zwischen den Wälzkörpern (6) und den Lagerringen (2, 4) mehrere gleichmäßig auf dem Umfang verteilte Wälzkörper (6) durch Hohlrollen (8) ersetzt sind, die einen geringfügig größeren Durchmesser und einen geringeren Elastizitätsmodul als die übrigen Wälzkörper (6) aufweisen, um im lastfreien Zustand des Radialwälzlagers (1) einen ständigen Kontakt zu den Lagerringen (2, 4) und somit einen stetigen Antrieb des Lagerkäfigs (7) und damit der übrigen Wälzkörper (6) mit kinematischer Drehzahl gewährleisten, **dadurch gekennzeichnet, dass** die Hohlrollen (8) eine erhöhte Biegewechselfestigkeit aufweisen, indem ihre Innenmantelflächen (9) mit einer örtliche Spannungsspitzen vermeidenden maximalen Oberflächenrauheit von R_{Z} ≤ 25 µm ohne jegliche Riefen in Axialrichtung ausgebildet sind.

2. Radialwälzlager nach Anspruch 1, **dadurch gekennzeichnet, dass** die Hohlrollen (8) die gleiche axiale Länge wie die übrigen Wälzkörper (6) aufweisen und deren Innenmantelflächen (9) bevorzugt mit einer Oberflächenrauheit von R_{Z} ≤ 6,3 µm ausgebildet sind.

3. Radialwälzlaaer nach Anspruch 2, **dadurch gekennzeichnet, dass** die Innenmantelflächen (9) der Hohlrollen (8) bevorzugt durch Hartdrehen bearbeitet sind.

4. Radialwälzlager nach Anspruch 2, **dadurch gekennzeichnet, dass** die Innenmantelflächen (9) der Hohlrollen (8) bevorzugt durch Hartglattwalzen bearbeitet sind.

5. Radialwälzlager nach Anspruch 2, **dadurch gekennzeichnet, dass** die Innenmantelflächen (9) der Hohlrollen (8) bevorzugt durch Schleifen und Honen bearbeitet sind.

6. Radialwälzlager nach Ansprüchen 3 oder 4 und 5, **dadurch gekennzeichnet, dass** die Innenmantelflächen (9) der Hohlrollen (8) durch eine Kombination aus Hartdrehen oder Hartglattwalzen sowie Schleifen und Honen bearbeitet sind.

## Claims

1. Radial roller bearing, in particular for the bearing of shafts in wind power transmissions, which essentially comprises an outer bearing ring (2) with an inner raceway (3) and an inner bearing ring (4), which is arranged coaxially with respect thereto and has an outer raceway (5), as well as a multiplicity of roller bodies (6) which roll between the bearing rings (2, 4) on their raceways (3, 5) and are held at uniform distances from one another in the circumferential direction by a bearing cage (7), with a plurality of roller bodies (6) which are distributed uniformly on the circumference being replaced by hollow rollers (8) in order to avoid slip between the roller bodies (6) and the bearing rings (2, 4), which hollow rollers (8) have a slightly larger diameter and a lower modulus of elasticity than the other roller bodies (6), in order to ensure, in the load-free state of the radial roller bearing (1), a continuous contact with the bearing rings (2, 4) and thus a continuous drive for the bearing cage (7) and thus for the other roller bodies (6) at a kinematic rotation speed, **characterized in that** the hollow rollers (8) have an increased bending fatigue strength, **in that** their inner envelope surfaces (9) are formed with a maximum surface roughness, which avoids local stress peaks, of R_{Z} ≤ 25 µm, without any grooves in the axial direction.

2. Radial roller bearing according to Claim 1, **characterized in that** the hollow rollers (8) have the same axial length as the other roller bodies (6) and whose inner envelope surfaces (9) are preferably formed with a surface roughness of R_{Z} ≤ 6.3 µm.

3. Radial roller bearing according to Claim 2, **characterized in that** the inner envelope surfaces (9) of the hollow rollers (8) are preferably processed by hard turning.

4. Radial roller bearing according to claim 2, **characterized in that** the inner envelope surfaces (9) of the hollow rollers (8) are preferably processed by hard smooth rolling.

5. Radial roller bearing according to Claim 2, **characterized in that** the inner envelope surfaces (9) of the hollow rollers (8) are preferably processed by grinding and planing.

6. Radial roller bearing according to Claims 3 or 4 and 5, **characterized in that** the inner envelope surfaces (9) of the hollow rollers (8) are processed by a combination of hard turning or hard smooth rolling as well as grinding and planing.

## Revendications

1. Palier à roulement radial, en particulier pour le support sur palier d'arbres d'éoliennes, constitué essentiellement d'une bague de palier extérieure (2) avec une piste de roulement intérieure (3) et d'une bague de palier intérieure (4) disposée coaxialement par rapport à celle-ci, avec une piste de roulement extérieure (5), ainsi que d'une pluralité de corps de roulement (6) roulant entre les bagues de palier (2, 4) sur leurs pistes de roulement (3, 5), lesquels corps de roulement sont maintenus espacés les uns des autres par une cage de palier (7) dans la direction périphérique à intervalles réguliers, plusieurs corps de roulement (6) répartis uniformément sur la périphérie étant remplacés par des rouleaux creux (8) pour éviter un glissement entre les corps de roulement (6) et les bagues de palier (2, 4), lesquels rouleaux creux présentent un diamètre légèrement plus grand et un module d'élasticité légèrement plus faible que les autres corps de roulement (6), afin d'assurer dans l'état non sollicité en charge du palier à roulement radial (1) un contact constant avec les bagues de palier (2, 4) et donc un entraînement constant de la cage de palier (7) et par conséquent des autres corps de roulement (6) avec une vitesse de rotation cinématique, **caractérisé en ce que** les rouleaux creux (8) présentent une résistance aux efforts alternés en flexion accrue, par le fait que leurs surfaces d'enveloppe intérieures (9) sont réalisées avec une rugosité de surface maximale évitant les pointes de contraintes locales de R_{Z} ≤ 25 µm sans stries respectives dans la direction axiale.

2. Palier à roulement radial selon la revendication 1, **caractérisé en ce que** les rouleaux creux (8) présentent la même longueur axiale que les autres corps de roulement (6) et leurs surfaces d'enveloppe intérieures (9) sont réalisées de préférence avec une rugosité de surface de R_{z} ≤ 6,3 µm.

3. Palier à roulement radial selon la revendication 2, **caractérisé en ce que** les surfaces d'enveloppe intérieures (9) des rouleaux creux (8) sont de préférence usinées par tournage dur.

4. Palier à roulement radial selon la revendication 2, **caractérisé en ce que** les surfaces d'enveloppe intérieures (9) des rouleaux creux (8) sont de préférence usinées par brunissage dur.

5. Palier à roulement radial selon la revendication 2, **caractérisé en ce que** les surfaces d'enveloppe intérieures (9) des rouleaux creux (8) sont de préférence usinées par rectification et honage.

6. Palier à roulement radial selon les revendications 3 ou 4 et 5, **caractérisé en ce que** les surfaces d'enveloppe intérieures (9) des rouleaux creux (8) sont usinées par une combinaison d'un tournage dur ou d'un brunissage dur et d'une rectification et d'un honage.
